# EUROPÄISCHE PATENTSCHRIFT

(11) **EP 3 216 367 B1**
(45) Veröffentlichungstag und Bekanntmachung des Hinweises auf die Patenterteilung: **18.08.2021**
(21) Anmeldenummer: 17157114.4
(22) Anmeldetag: 21.02.2017
(51) Int. Cl.: A45C 13/10, B60R 11/00, F16B 1/00

(54) **WANDHALTERUNG FÜR ELEKTRONISCHE BAUTEILE**
WALL HOLDER FOR ELECTRONIC COMPONENTS
SUPPORT DE PAROI POUR COMPOSANTS ÉLECTRONIQUES

(30) Priorität: 08.03.2016 DE 102016002739
(43) Veröffentlichungstag der Anmeldung: 13.09.2017
(73) Patentinhaber: CONTROLtronic GmbH, 80992 München (DE)
(72) Erfinder: Messner, Markus, 80639 München (DE)
(74) Vertreter: Behr, Wolfgang

(56) Entgegenhaltungen:
- DE-U1-202015 006 172
- KR-A- 20140 104 836
- US-A1- 2015 024 611

## Beschreibung

Die Erfindung betrifft eine Wandhalterung für elektronische Bauteile.

Immer häufiger werden Bedienelemente oder Anzeigen mit beispielsweise berührungsempfindlichen Anzeigeschirmen zur Steuerung der Gebäudeelektronik verwendet, sei es zur Regulierung der Heizung oder allgemein des Raumklimas, zur Steuerung elektrischer Rolläden oder allgemein Sicht- und Sonnenschutzvorrichtungen, zur Steuerung der Beleuchtung oder dergleichen. Dabei kann es wünschenswert sein, diese Bedienelemente oder Anzeigen zu überdecken und an der Wand zu halten. Eine herkömmliche Wandhalterung ist aus der DE202015006172U1 bekannt.

Ziel der Erfindung ist es, eine Wandhalterung bereitzustellen, die formschön ist und eine Abdeckung und Bedienung der elektronischen Bauteile und einen einfachen Zugriff durch einen Techniker ermöglicht. Zudem soll das Bauteil vor einem unbefugten Zugriff geschützt sein.

Vor diesem Hintergrund betrifft die Erfindung eine Wandhalterung gemäß Anspruch 1.

So wird das abnehmbare Teil durch die Anziehungskraft zwischen Haltemagneten und Montageelementen am stationären Teil gehalten. Diese Anziehungskraft ist stark genug, um zu verhindern, dass das abnehmbare Teil unbefugt vom Rahmen abgezogen wird, insbesondere dann, wenn die Abdeckplatte und, wie in der Einbausituation bevorzugt, der Umfangsbereich der Abdeckplatte keine Angriffspunkte für eine Entnahme aufweisen. Eine einfache Abnahme kann durch Annäherung eines Montagewerkzeugs mit Lösemagneten erreicht werden, der stärker mit den Haltemagneten wechselwirkt als die Montageelemente (also beispielsweise selbst permanentmagnetisch oder stärker permanentmagnetisch als die Montageelemente ist). Denn dann werden die Haltemagnete von den Montageelementen weggezogen und deren Wechselwirkung durch den vergrößerten Abstand geringer. Gleichzeitig haftet das Montagewerkzeug magnetisch an den Haltemagneten und somit am abnehmbaren Teil und kann dazu verwendet werden, die das abnehmbare Teil samt Abdeckplatte unter Überwindung der verbleibenden Anziehungskraft zwischen Haltemagneten und Montageelementen abzuziehen.

Es reicht aus, wenn entweder Haltemagnete oder Montageelemente magnetisch sind, während die jeweils anderen Elemente lediglich magnetisierbar sind. So können beispielsweise die Haltemagnete nicht permanentmagnetisch sondern lediglich magnetisierbar sein, während die Montageelemente permanentmagnetisch sind. Bevorzugt ist allerdings, dass die Haltemagnete permanentmagnetisch und die Montageelemente magnetisierbar sind. Ein geeignetes magnetisches oder magnetisierbares Material umfasst ein Metall und insbesondere Eisen oder eine Eisenlegierungen.

In einer Ausführungsform umfasst das abnehmbare Teil mehrere um den Aufnahmebereich verteilte Haltemagnete.

In einer Ausführungsform umfasst das stationäre Teil ein flächiges Montageelement für die Haltemagnete. Beispielsweise handelt es sich bei dem Montageelement um einen vorzugsweise rechteckigen metallischen Rahmen, der den Aufnahmebereich umgibt. Ferner kann es sich bei dem Montageelement um eine Metallplatte handeln, die unterhalb des Aufnahmebereichs sitzt.

In einer Ausführungsform umfasst das stationäre Teil mehrere punktförmige Montageelemente für jeweils einen Haltemagnet, wobei die Montageelemente und die Haltemagnete an korrespondierenden Positionen angeordnet sind. Beispielsweise handelt es sich bei den Montageelementen um mehrere um den Aufnahmebereich verteilte punktförmige Bauteile wie Stifte, Schrauben, Bolzen oder Knöpfe. Die Montageelemente können in einem Sockel angeordnet sein, der den Aufnahmebereich umgibt.

In einer Ausführungsform umfasst das abnehmbare Teil ein Verbindungsteil, das an der Innenseite der Abdeckplatte angebracht ist, beispielsweise mit einer Klebe- oder Schraubverbindung. Das Verbindungsteil kann in dieser Ausführungsform die Haltemagnete aufnehmen. Das Verbindungsteil kann beispielsweise die Form eines beispielsweise rechteckigen Rahmens haben, der den Aufnahmebereich umgibt.

In einer Ausführungsform umfasst die Wandhalterung vier oder mehr Haltemagnete, die beispielsweise mittig im Bereich der Seitenwände oder im Bereich der Ecken des als Rahmen ausgebildeten Verbindungsteils angeordnet sind.

In einer Ausführungsform sind die Haltemagneten so im abnehmbaren Teil gelagert, dass sie auf einer linearen Bahn normal zur Ebene der Abdeckplatte hin und her bewegt werden können.

In einer Ausführungsform weist das abnehmbare Teil und insbesondere das Verbindungsteil Bohrungen auf, in denen die Haltemagnete aufgenommen sind und die als Führungen für die Bewegung der Haltemagnete dienen. Die Bohrungen verlaufen vorzugsweise linear und normal zur Ebene der Abdeckplatte. Der Querschnitt der Bohrungen kann beispielsweise rund sein. Runde Bohrungen lassen sich am einfachsten herstellen.

In einer Ausführungsform handelt es sich bei den Haltemagneten um kreiszylindrische Magnetknöpfe, deren Durchmesser in etwa dem Innendurchmesser der Bohrungen entspricht, sodass diese in den Bohrungen nur entlang der Achse verschoben und um die Achse gedreht, nicht jedoch aus der Achse gedreht werden können. So kann sichergestellt werden, dass sich die Richtung der magnetischen Orientierung nicht ändert.

In einer Ausführungsform handelt es sich bei der Abdeckplatte um eine Glasplatte oder um eine durchsichtige Kunststoffplatte.

In einer Ausführungsform ist die Abdeckplatte nicht als durchgehende Platte ausgebildet, sondern weist im Bereich oberhalb des Aufnahmebereichs ein Fenster auf, durch das ein im Aufnahmebereich befindliches Bauteil direkt, d.h., ohne zwischengelagerte Platte bedient werden kann. In diesem Fall überdeckt die Abdeckplatte beispielsweise alle Seitenkanten des Bauteils, um eine unbefugte Entnahme oder ein zufälliges Herausfallen zu verhindern.

Vor dem eingangs genannten Hintergrund betrifft die Erfindung ferner ein Verfahren zur Abnahme des abnehmbaren Teils vom stationären Teil einer erfindungsgemäßen Wandhalterung, wobei ein Montagewerkzeug, das wenigstens einen Lösemagneten umfasst, an die Abdeckplatte angenähert wird, und wobei die Lösemagnete stärker auf die Haltemagnete wirken als die Montageelemente.

In einer Ausführungsform umfasst das Montagewerkzeug mehrere punktförmige Lösemagneten für jeweils einen Haltemagnet, wobei die Lösemagneten innerhalb des Montagewerkzeugs in derselben relativen Position zueinander angeordnet sind wie die Haltemagnete in der Wandhalterung. Alternativ kann das Montagewerkzeug einen ein- oder mehrteiligen flächigen Lösemagneten aufweisen, dessen Verlauf innerhalb des Montagewerkzeugs so ist, dass dessen Verlauf Punkte umfasst, deren relative Position zueinander so ist wie die der Haltemagnete in der Wandhalterung. So wird erreicht, dass bei Annäherung des Montagewerkzeugs an die Abdeckplatte alle Haltemagnete gleichzeitig von den Montageelementen weggezogen werden.

Beispielsweise kann das Montagewerkzeug gleich viele Lösemagneten umfassen wie das abnehmbare Teil Haltemagnete.

In einer Ausführungsform umfasst das Montagewerkzeug einen Griff. Dies erleichtert die Verwendung zum Abziehen des abnehmbaren Teils.

Das Abnehmen des abnehmbaren Teils kann dazu dienen, Zugriff zur Elektronik zu erlangen oder beispielsweise ein elektronisches Bauteil in den Aufnahmebereich einzulegen oder es daraus zu entnehmen.

Die Erfindung betrifft auch ein System umfassend eine erfindungsgemäße Wandhalterung und ein Montagewerkzeug, wie sie im Zusammenhang mit dem erfindungsgemäßen Verfahren beschrieben ist.

Die Erfindung umfasst auch die erfindungsgemäße Wandhalterung mit einer hinter der Abdeckplatte im Aufnahmebereich befindlichen Elektronik oder mit einem in den Aufnahmebereich eingelegten elektronischen Bauteil. Geeignete Elektronikbauteile weisen vorzugsweise einen Touchscreen auf, der durch die Abdeckplatte hindurch bedient werden kann. Beispiele für geeignete Geräte, die als eigenständig funktionsfähiges Ganzes entnommen werden können, umfassen Smartphones oder Tablets.

Letztlich betrifft die Erfindung auch ein Gebäude mit einer Wand und einer in einer Ausnehmung der Wand angeordneten erfindungsgemäßen Wandhalterung. Vorzugsweise ist dabei vorgesehen, dass die Außenoberfläche der Abdeckplatte mit der Ebene der Wand fluchtet.

So wird kein Angriffspunkt gegeben, um die Abdeckplatte unter Überwindung der Anziehungskraft zwischen Haltemagneten und Montageelementen und ohne die Hilfe eines geeigneten magnetischen Montagewerkzeugs abzuziehen.

Weitere Einzelheiten und Vorteile der Erfindung ergeben sich aus dem nachfolgend anhand der Figuren beschriebenen Ausführungsbeispiel. In den Figuren zeigen:
- Figur 1:: eine erfindungsgemäße Wandhalterung nebst Montagewerkzeug in einer geschlossenen Stellung;
- Figur 2:: eine erfindungsgemäße Wandhalterung nebst Montagewerkzeug in einer geöffneten Stellung; und
- Figur 3:: eine weitere Ausführungsform einer erfindungsgemäßen Wandhalterung in einer geschlossenen Stellung.

Die erfindungsgemäße Wandhalterung ist in den Figuren allgemein mit dem Bezugszeichen 1 gekennzeichnet und umfasst ein stationäres Teil 2 und ein abnehmbares Teil 3.

Das stationäre Teil 2 umfasst eine nicht näher dargestellte und in einer Ausnehmung einer Gebäudewand einlegbare Fassung und eine Metallplatte 4. Die Metallplatte ist unterhalb eines Aufnahmebereichs 5 für ein elektronisches Gerät oder für Elektronikbauteile angeordnet und steht auf allen Seiten über diesen Bereich 5 über.

Das abnehmbare Teil 3 weist eine Abdeckplatte 6 auf, die aus Glas besteht, den Aufnahmebereich 5 überdeckt und ebenfalls auf allen Seiten über diesen übersteht. An der Innenseite der Abdeckplatte 6 ist ein rahmenförmiges Verbindungsteil 7 aufgeklebt, welches den Aufnahmebereich 5 auf allen Seiten umgibt.

In jeder Seitenwand des rahmenförmigen Verbindungsteils 7 befindet sich auf etwa halbem Weg eine normal auf die Ebene der Abdeckplatte 6 stehende Bohrung 8, in welcher ein axial verschieblicher Haltemagnet 9 angeordnet ist. Bei dem Haltemagneten handelt es sich um einen Permanentmagneten. Die Bohrung 8 ist im Querschnitt rund und der Haltemagnet 9 ist zylindrisch, sodass er zwar entlang der Achse verschoben und um die Achse gedreht werden kann, jedoch nicht aus der Achse gedreht werden kann.

Mit dem Bezugszeichen 10 ist ein Montagewerkzeug gekennzeichnet, das lediglich schematisch anhand eines einzigen Lösemagneten 11 dargestellt ist. Das Montagewerkzeug 10 umfasst jedoch weiterhin mehrere zu den unterschiedlichen Haltemagneten 9 im abnehmbaren Teil 3 korrespondierende Lösemagneten 11 sowie einen Haltegriff.

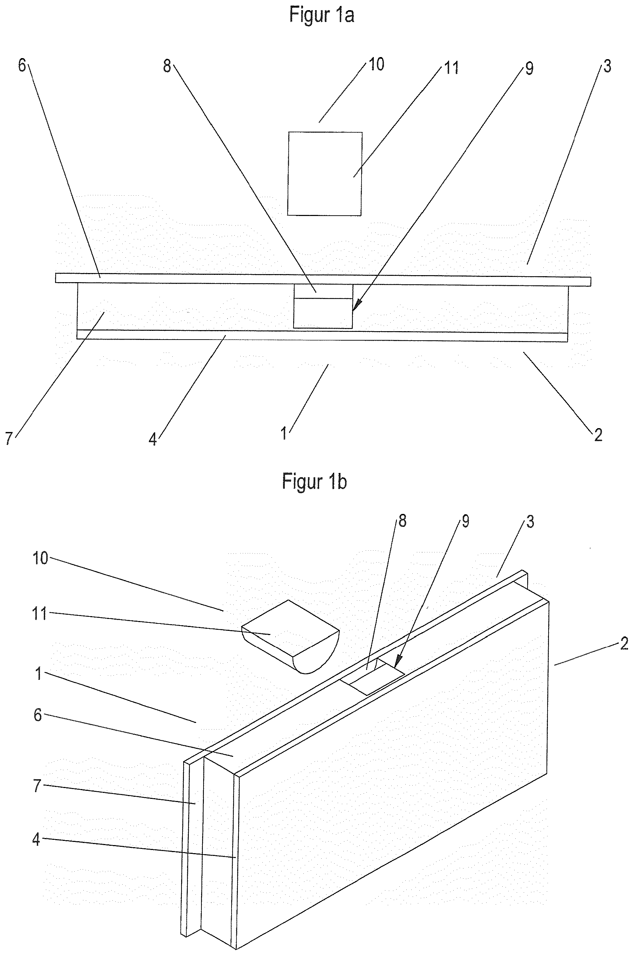

Figur 1 zeigt die erfindungsgemäße Haltevorrichtung in einer geschlossenen Stellung, wobei sich die Haltemagneten 9 am montageplattenseitigen Ende der Bohrungen 8 befinden. Diese Position der Haltemagneten 9 wird im Wesentlichen durch die magnetische Anziehung zwischen dem permanentmagnetischen Halteelementen 9 und der metallischen Eisen- oder Eisenlegierungsplatte 4 erzwungen. Durch die Nähe der Haltemagneten 9 zur Montageplatte 4 ist die Wechselwirkung zwischen diesen beiden Elementen relativ stark, wodurch ein Abnehmen des (nur magnetisch am stationären Teil 2 fixierten) abnehmbaren Teils 3 nur unter Überwindung einer relativ großen Kraft möglich ist, nämlich der Anziehungskraft zwischen den Haltemagneten 9 und der Montageplatte 4.

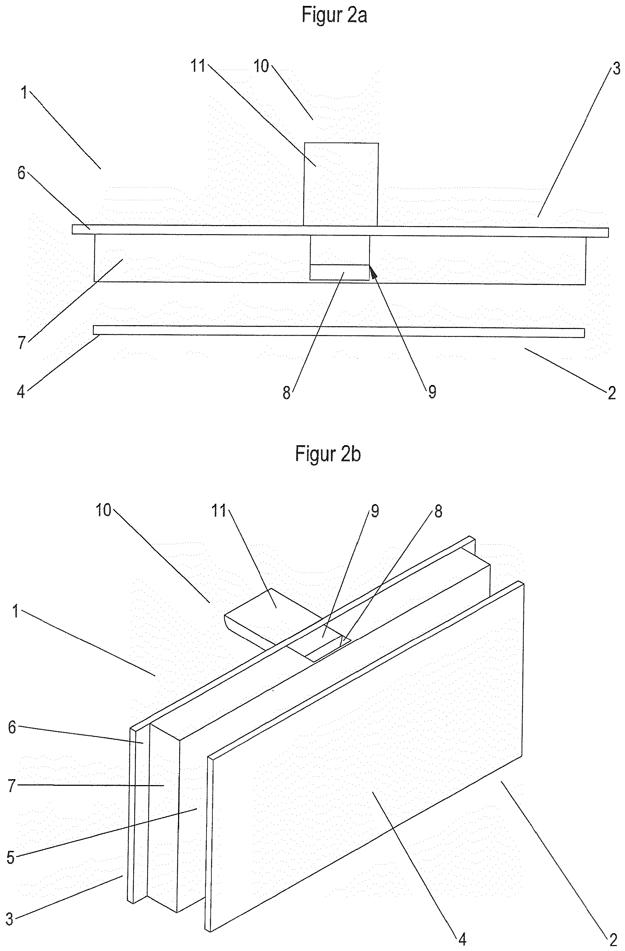

Wird das Montagewerkzeug 10 mit seinen Lösemagneten 11 auf die Montageplatte 6 gelegt, kommt es zu einer magnetischen Wechselwirkung zwischen den Lösemagneten 11 und den Haltemagneten 9. Die magnetischen bzw. magnetisierbaren Elemente 4, 9 und 11 sind so ausgebildet, dass die magnetische Anziehungskraft zwischen Lösemagneten 11 und Haltemagneten 9 stärker ist als die magnetische Anziehungskraft zwischen Haltemagneten 9 und Montageplatte 4, obwohl sich anfangs durch den Bewegungsspielraum der Haltemagneten 9 noch ein zusätzlicher Abstand zwischen den Haltemagneten 9 und den Lösemagneten 11 ergibt. Daher ziehen die Lösemagneten 11 des Montagewerkzeugs 10 die Haltemagneten 9 von der Montageplatte 4 weg und die Haltemagneten 9 verschieben sich innerhalb der Bohrung 8 linear in Richtung der Abdeckplatte. Dies führt einerseits dazu, dass das Montagewerkzeug 10 magnetisch am abnehmbaren Teil 3 haftet, und es bewirkt zudem, dass durch die nun größere Entfernung die magnetische Anziehungskraft zwischen den Haltemagneten 9 und der Abdeckplatte 4 gering ist. Daher kann mit dem Montagewerkzeug 10, dessen magnetische Haftung am abnehmbaren Teil 3 nun stärker ist als die Haftung des abnehmbaren Teils 3 am stationären Teil 2, dazu verwendet werden, das abnehmbare Teil 3 abzuziehen. Dies ist in Figur 2 dargestellt.

Die Abnahme des abnehmbaren Teils 3 kann beispielsweise der Entnahme oder dem Einlegen eines elektronischen Gerätes in den Aufnahmebereich 5 bzw. dem Zugriff zu einer in dem Aufnahmebereich 5 angeordneten Elektronik dienen. Ferner kann sie dem Verlegen und Anschließen von Leitungen innerhalb des stationären Teils 2, an dem Elektronikbauteil oder an dem abnehmbaren Teil 3 dienen. An Stelle eines elektronischen Geräts, das als eigenständig funktionsfähiges Ganzes entnommen werden kann, können sich beliebige andere Funktions- und Anzeigeeinsätze im Aufnahmebereich 5 unterhalb der Abdeckplatte 6 befinden, die z.B. eine Anzeige- und/oder Bedienelektronik umfassen. Besonders bevorzugt ist es unabhängig vom Gerät oder von der Art der Elektronik, wenn das Gerät oder die Elektronik eine beleuchtete und berührungsempfindliche Bedienoberfläche (einen Touchscreen) aufweist.

Um das abnehmbare Teil 3 wieder auf das stationäre Teil 2 aufzusetzen und wiederum den Zustand der Figur 1 zu erreichen, kann das abnehmbare Teil 3, das magnetisch am Montagewerkzeug 10 anhaftet, auf das stationäre Teil 2 aufgesetzt und zudem händisch auf dieses aufgedrückt werden. Anschließend kann es unter Überwindung der magnetischen Anziehungskraft zwischen Lösemagneten 11 und Haltemagneten 9 abgezogen werden kann, während das abnehmbare Teil 3 manuell an das stationäre Teil 2 gedrückt wird. Sobald das Montagewerkzeug vom abnehmbaren Teil entfernt wurde, werden die Haltemagneten 9 innerhalb der Bohrung 8 wieder in Richtung der Montageplatte 4 und somit in die in Figur 1 dargestellte Ausgangsposition gezogen.

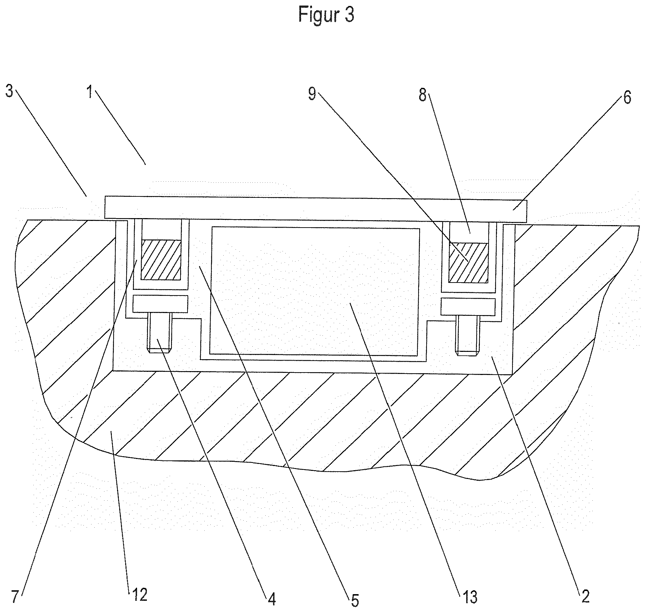

Figur 3 zeigt eine weitere Ausführungsform einer erfindungsgemäßen Wandhalterung 1 in einer geschlossenen Stellung, wobei zu den der Ausführungsform gemäß Figuren 1 und 2 korrespondierende Bauteile mit gleichen Bezugszeichen versehen sind.

Das stationäre Teil 2 ist hierbei in Form eines Unterputzgehäuses ausgebildet, welches mehrere punktförmige Montageelemente in Form von magnetisierbaren Metall- und beispielsweise Eisenschrauben 4 aufweist. Die Haltemagnete 9 innerhalb des abnehmbaren Teils 3 sind an zu den Schrauben 4 korrespondierenden Positionen innerhalb des Verbindungsteils 7 angeordnet. Die Verwendung von Schrauben 4 als Montageelemente hat den Vorteil, dass die Tiefe der Schraubenköpfe durch ein Ein- bzw. Ausdrehen der Schrauben 4 individuell angepasst werden kann, was einen Putzausgleich bei der Montage ermöglicht.

In der Ausführungsform gemäß Figur 3 sind neben den bereits in Figuren 1 und 2 sichtbaren Elementen auch noch die Wand 12 und ein in den Aufnahmebereich 5 eingelegt Gerät 13 abgebildet.

## Patentansprüche

1. Wandhalterung (1) für ein elektronisches Bauteil mit einem stationären Teil (2), einem abnehmbaren Teil (3), das eine Abdeckplatte (6) aufweist, und einem zwischen dem stationären Teil (2) und der Abdeckplatte (6) liegenden Aufnahmebereich (5) für das elektronische Bauteil, wobei das abnehmbare Teil (3) lösbar auf dem stationären Teil (3) aufliegt und die Abdeckplatte (6) im aufliegenden Zustand den Aufnahmebereich (5) überdeckt, **dadurch gekennzeichnet, dass** das abnehmbare Teil (3) wenigstens einen Haltemagneten (9) und das stationäre Teil (2) wenigstens ein magnetisches oder magnetisierbares Montageelement (4) aufweist, um die Haltemagnete (9) anzuziehen, wobei die Haltemagnete (9) derart beweglich im abnehmbaren Teil (3) gelagert sind, dass deren Abstand zu den Montageelementen (4) verändert werden kann, während das abnehmbare Teil (3) auf dem stationären Teil (2) aufliegt.

2. Wandhalterung nach Anspruch 1, **dadurch gekennzeichnet, dass** die Haltemagnete (9) permanentmagnetisch und die Montageelemente (4) magnetisierbar sind.

3. Wandhalterung nach einem der vorhergehenden Ansprüche, **dadurch gekennzeichnet, dass** das abnehmbare Teil (3) mehrere um den Aufnahmebereich (5) verteilte Haltemagnete (9) umfasst.

4. Wandhalterung nach einem der vorhergehenden Ansprüche, **dadurch gekennzeichnet, dass** das stationäre Teil (2) ein flächiges Montageelement (4) umfasst, das die Haltemagnete (9) anzieht.

5. Wandhalterung nach einem der Ansprüche 1 bis 3, **dadurch gekennzeichnet, dass** das stationäre Teil (2) mehrere punktförmige Montageelemente (4) für jeweils einen Haltemagneten (9) umfasst, wobei die Montageelemente (4) und die Haltemagnete (9) an korrespondierenden Positionen angeordnet sind.

6. Wandhalterung nach einem der vorhergehenden Ansprüche, **dadurch gekennzeichnet, dass** das abnehmbare Teil (3) ein Verbindungsteil (7), vorzugsweise einen Rahmen (7) umfasst, das an der Innenseite der Abdeckplatte (6) angebracht ist und in dem die Haltemagnete (9) aufgenommen sind.

7. Wandhalterung nach einem der vorhergehenden Ansprüche, **dadurch gekennzeichnet, dass** die Haltemagnete (9) so im abnehmbaren Teil gelagert sind, dass sie auf einer linearen Bahn normal zur Ebene der Abdeckplatte (6) hin und her bewegt werden können.

8. Wandhalterung nach einem der vorhergehenden Ansprüche, **dadurch gekennzeichnet, dass** das abnehmbare Teil (3) und insbesondere das Verbindungsteil (7) Bohrungen (8) aufweist, in denen die Haltemagnete (9) aufgenommen sind, wobei die Bohrungen (8) vorzugsweise linear und normal zur Ebene der Abdeckplatte (6) verlaufen und wobei der Querschnitt der Bohrungen (8) vorzugsweise rund ist.

9. Wandhalterung nach einem der vorhergehenden Ansprüche, **dadurch gekennzeichnet, dass** es sich bei den Haltemagneten (9) um kreiszylindrische Magnetknöpfe handelt, deren Durchmesser vorzugsweise in etwa dem Innendurchmesser der Bohrungen (8) entspricht.

10. Verfahren zur Abnahme des abnehmbaren Teils (3) vom stationären Teil (2) einer Wandhalterung (1) nach einem der vorhergehenden Ansprüche,
**dadurch gekennzeichnet,**
**dass** ein Montagewerkzeug (10), das wenigstens einen Lösemagneten (11) umfasst, an die Abdeckplatte (6) angenähert wird, wobei die Lösemagnete (11) stärker auf die Haltemagnete (9) wirken als die Montageelemente (4).

## Claims

1. A wall holder (1) for an electronic component, with a stationary part (2), a removable part (3), which comprises a cover plate (6), and a receiving region (5) for the electronic component located between the stationary part (2) and the cover plate (6), wherein the removable part (3) is supported releasably on the stationary part (3) and, in the supported state, the cover plate (6) covers the receiving region (5), **characterised in that** the removable part (3) comprises at least one holding magnet (9) and the stationary part (2) comprises at least one magnetic or magnetisable assembly element (4) to attract the holding magnets (9), wherein the holding magnets (9) are mounted movably in the removable part (3) in such a way that their distance from the assembly elements (4) can be varied while the removable part (3) is supported on the stationary part (2).

2. The wall holder according to claim 1, **characterised in that** the holding magnets (9) are permanently magnetic and the assembly elements (4) are magnetisable.

3. The wall holder according to one of the preceding claims, **characterised in that** the removable part (3) comprises a plurality of holding magnets (9) distributed around the receiving region (5).

4. The wall holder according to one of the preceding claims, **characterised in that** the stationary part (2) comprises a flat assembly element (4), which attracts the holding magnets (9).

5. The wall holder according to one of claims 1 to 3, **characterised in that** the stationary part (2) comprises a plurality of punctiform assembly elements (4) for one holding magnet (9) each, wherein the assembly elements (4) and the holding magnets (9) are arranged at corresponding positions.

6. The wall holder according to one of the preceding claims, **characterised in that** the removable part (3) comprises a connecting part (7), preferably a frame (7), which is attached to the inside of the cover plate (6) and in which the holding magnets (9) are received.

7. The wall holder according to one of the preceding claims, **characterised in that** the holding magnets (9) are mounted in the removable part in such a way that they can be moved back and forth on a linear path normal to the plane of the cover plate (6).

8. The wall holder according to one of the preceding claims, **characterised in that** the removable part (3) and in particular the connecting part (7) has holes (8), in which the holding magnets (9) are received, wherein the holes (8) preferably extend in a linear manner and normal to the plane of the cover plate (6), and wherein the cross-section of the holes (8) is preferably round.

9. The wall holder according to one of the preceding claims, **characterised in that** the holding magnets (9) are circular cylindrical magnetic buttons, the diameter of which preferably corresponds approximately to the inner diameter of the holes (8).

10. A method of removing the removable part (3) from the stationary part (2) of a wall holder (1) according to one of the preceding claims,
**characterised in that**
an assembly tool (10) comprising at least one releasing magnet (11) is moved closer to the cover plate (6), wherein the releasing magnets (11) act on the holding magnets (9) more strongly than the assembly elements (4).

## Revendications

1. Support de paroi (1) pour un composant électronique avec une partie stationnaire (2), une partie pouvant être retirée (3), qui présente une plaque de recouvrement (6), et une zone de réception (5) située entre la partie stationnaire (2) et la plaque de recouvrement (6) pour le composant électronique, dans lequel la partie pouvant être retirée (3) repose de manière amovible sur la partie stationnaire (3) et la plaque de recouvrement (6) recouvre, dans l'état reposé, la zone de réception (5), **caractérisé en ce que** la partie pouvant être retirée (5) présente au moins un aimant de maintien (9) et la partie stationnaire (2) présente au moins un élément de montage (4) magnétique ou magnétisable pour attirer les aimants de maintien (9), dans lequel les aimants de maintien (9) sont montés de telle manière de manière mobile dans la partie pouvant être retirée (3) que leur distance par rapport aux éléments de montage (4) peut être modifiée, tandis que la partie pouvant être retirée (3) repose sur la partie stationnaire (2).

2. Support de paroi selon la revendication 1, **caractérisé en ce que** les aimants de maintien (9) sont à aimantation permanente et les éléments de montage (4) peuvent être magnétisés.

3. Support de paroi selon l'une quelconque des revendications précédentes, **caractérisé en ce que** la partie pouvant être retirée (3) comprend plusieurs aimants de maintien (9) répartis autour de la zone de réception (5).

4. Support de paroi selon l'une quelconque des revendications précédentes, **caractérisé en ce que** la partie stationnaire (2) comprend un élément de montage plat (4), qui attire les aimants de maintien (9).

5. Support de paroi selon l'une quelconque des revendications 1 à 3, **caractérisé en ce que** la partie stationnaire (2) comprend plusieurs éléments de montage (4) en forme de points pour respectivement un aimant de maintien (9), dans lequel les éléments de montage (4) et les aimants de maintien (9) sont disposés sur des positions correspondants.

6. Support de paroi selon l'une quelconque des revendications précédentes, **caractérisé en ce que** la partie pouvant être retirée (3) comprend une partie de liaison (7), de préférence un cadre (7), qui est installé sur le côté intérieur de la plaque de recouvrement (6) et dans lequel les aimants de maintien (9) sont reçus.

7. Support de paroi selon l'une quelconque des revendications précédentes, **caractérisé en ce que** les aimants de maintien (9) sont montés de telle sorte dans la partie pouvant être retirée qu'ils peuvent être déplacés en va-et-vient sur une trajectoire linéaire de manière normale par rapport au plan de la plaque de recouvrement (6).

8. Support de paroi selon l'une quelconque des revendications précédentes, **caractérisé en ce que** la partie pouvant être retirée (3) et en particulier la partie de liaison (7) présentent des alésages (8), dans lesquels les aimants de maintien (9) sont reçus, dans lequel les alésages (8) s'étendent de préférence de manière linéaire et de manière normale par rapport au plan de la plaque de recouvrement (6) et dans lequel la section transversale des alésages (8) est de préférence ronde.

9. Support de paroi selon l'une quelconque des revendications précédentes, **caractérisé en ce que** les aimants de maintien (9) sont des boutons magnétiques cylindriques circulaires, dont le diamètre correspond de préférence au diamètre intérieur des alésages (8).

10. Procédé pour retirer la partie pouvant être retirée (3) de la partie stationnaire (2) d'un support de paroi (1) selon l'une quelconque des revendications précédentes,
**caractérisé en ce**
**qu'**un outil de montage (10), qui comprend au moins un aimant amovible (11), est approché de la plaque de recouvrement (6), dans lequel les aimants amovibles (11) agissent plus fortement sur les aimants de maintien (9) que les éléments de montage (4).
